# EUROPEAN PATENT SPECIFICATION

(11) **EP 2 610 609 B1**
(45) Date of publication and mention of the grant of the patent: **10.10.2018**
(21) Application number: 11195977.1
(22) Date of filing: 29.12.2011
(51) Int. Cl.: G01N 21/64, G01N 21/77, G01N 31/22

(54) **Oxygen fluorescence quenching sensor, detector comprising the sensor, and method for producing the sensor**
Sauerstofffluoreszenzsensor, Detektor, der den Sensor enthält, und Verfahren zur Herstellung des Sensors
Capteur de fluorescence d'oxygène, détecteur comprenant le capteur, et procédé de fabrication du capteur

(43) Date of publication of application: 03.07.2013
(73) Proprietor: Honeywell Romania S.R.L., 014459 Bucharest (RO)
(72) Inventor: Serban, Bogdan-Catalin, 60000 Bucharest (RO); Mihaila, Mihai N., 023555 Bucharest (RO); Buiu, Octavian, Morristown, NJ 07962-2245 (US); Costea, Stefan Dan, 041444 Bucharest (RO)
(74) Representative: Houghton, Mark Phillip

(56) References cited:
- WO-A1-99/37998
- US-A1- 2007 243 618
- J. JANG ET AL: "Dual-Functionalized Polymer Nanotubes as Substrates for Molecular-Probe and DNA-Carrier Applications", ADVANCED FUNCTIONAL MATERIALS, vol. 16, no. 6, 4 April 2006 (2006-04-04), pages 754-759, XP55026865, ISSN: 1616-301X, DOI: 10.1002/adfm.200500832
- I.A. SHATALOV ET AL: "The effect of the potential of colloid titanium dioxide on fluorescence quenching", JOURNAL OF PHOTOCHEMISTRY AND PHOTOBIOLOGY A: CHEMISTRY, vol. 94, no. 1, 1 February 1996 (1996-02-01), pages 63-66, XP55026871, ISSN: 1010-6030, DOI: 10.1016/1010-6030(95)04205-9
- FUJIWARA Y ET AL: "An oxygen sensor based on the fluorescence quenching of pyrene chemisorbed layer onto alumina plates", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, vol. 89, no. 1-2, 1 March 2003 (2003-03-01), pages 187-191, XP004409485, ISSN: 0925-4005, DOI: 10.1016/S0925-4005(02)00462-8

## Description

### Field of the Invention

This invention relates to the design of oxygen sensors based on hard-soft acid-base relationships, to methods of preparing these sensors, and to oxygen detectors incorporating these sensors.

### Background

Determination of oxygen concentration is important in various fields such as automotive applications, medical devices, anesthesia monitors, and environmental monitoring. Recently, devices based on the fluorescence quenching of organic molecules have been developed to determine the concentration of oxygen. When exposed to light at an appropriate wavelength, the fluorescent substances absorb energy and are promoted from their ground state energy level (So) into an excited state energy level (S1). Fluorescent molecules are unstable in their excited states and can relax by different competing pathways.

Fluorescence based oxygen sensing elements work on the principle that relaxation of the S1 state can also occur through interaction with a second molecule through fluorescence quenching. Molecular oxygen (O₂) is an efficient quencher of fluorescence because of its unusual triplet ground state. Fluorophores used for oxygen sensing include: pyrene and its derivatives, quinoline, decacyclene and its derivatives, phenantrene, erythrosine B, and aluminum 2,9,16,23-tetraphenoxy-29H, 31H-phthalocyaninehydroxide. These fluorophores are incorporated into a polymer matrix such as: silicones, polystyrene, and ethyl cellulose that are selectively permeable to oxygen and adhere to glass.

One difficulty with incorporating fluorescent molecules into a polymer is that the fluorescent molecule may have poor solubility and may crystallize or aggregate within the polymer matrix upon coating and drying.

US 2007/0243618 discloses a device and method for non-invasive oxygen sensing of the sealed packages. Other relevant disclosures include Jang et al in "Dual Functionalised Polymer Nano Tubes As Substrates for Molecular Probe and a DNA Carrier Applications ", Advanced Functional Materials, volume 16, number 6, 4 April, 2006, pages 754-759. Shatalov et al, in "the effect of the potential of colloid titania dioxide on fluorescence quenching", The Journal of Photochemistry and Photobiology A: Chemistry, Volume 94, Number 1, 1 February, 1996, pages 63-66. Fujiwara, "An oxygen sensor based on the fluorescence quenching of pyrene chemisorbed layer onto alumina plates", Sensors and Actuators B, volume 89, number 1-2, 1 March, 2003, pages 187-191.

It would be useful to provide oxygen sensors that do not crystallize or aggregate within the polymer matrix upon coating and drying.

### Summary

The present invention relates to a fluorescence quenching oxygen sensor.
The sensor of the invention comprises a support having coated thereon: Cu₂O and one or more pyrene compounds represented by

Y-R-Pyrene (I)

attached to the Cu₂O surface, wherein Y is a thiol group or the anion of a thiol group and R is an aliphatic linking group having 1 to 19 carbon atoms.

In another aspect the present invention relates to a fluorescence quenching oxygen detector. The detector of the invention comprises a support having coated thereon: Cu₂O and one or more pyrene compounds represented by

Y-R-Pyrene (I);

attached to the Cu₂O surface, wherein Y is a thiol group or the anion of a thiol group and R is an aliphatic linking group having 1 to 19 carbon atoms;
an excitation source; and
a fluorescence detector.

In a further aspect the present invention relates to a method of preparing a fluorescence quenching oxygen sensor. The method comprises coating onto a support; Cu₂O and
overcoating the surface of the Cu₂O with one or more pyrene compounds represented by

Y-R-Pyrene (I);

wherein Y is thiol group or the anion of a thiol group and R is an aliphatic linking group having 1 to 19 carbon atoms.

In formula (I) R is an aliphatic linking group having from 1 to 19 carbon atoms. The aliphatic linking group may be straight chain or branched and may contain various substituents such as aliphatic groups (e.g., methyl, ethyl, propyl, *iso*-propyl, *sec-*butyl, etc.). In one embodiment, R is a straight chain alkylene group -(CH₂)ₘ- having from 1 to 19 methylene groups. In one embodiment, R is a linking group containing 9 to 19 carbon atoms. In one embodiment R is an aliphatic linking group containing 1 to 19 methylene groups containing one or more oxygen atoms.

In formula (I), Y is soft basic group. In the present invention Y is a thiol group, or the anion of a thiol group.

Other aspects, advantages, and benefits of the present invention are apparent from the detailed description, examples, and claims provided in this application.

### Brief Description of the Drawings

FIG. 1 illustrates a fluorescence oxygen sensor according to an example embodiment.
FIG. 2 illustrates a fluorescence oxygen detector according to an example embodiment.

### Detailed Description

We have found that R.G. Pearson's Hard-Soft Acid-Base (HSAB) relationships can be used to select organic polymers, inorganic fillers (metal or metal oxides) and fluorophores for oxygen sensors. The sensor can be incorporated into a fluorescence quenching oxygen detector. In particular, attachment of a pyrene fluorophore to a substrate using Pearson's hard-soft acid-base relationships provides material that can be used as a fluorescence quenching oxygen sensor and incorporated into a fluorescence quenching oxygen detector.

One method of classifying acids and bases involves the Hard-Soft Acid-Base (HSAB) relationships. This relationship, developed by R.G Pearson, applies HSAB relationships to Lewis acids and bases. HSAB relationships are used in chemistry for explaining stability of compounds, reaction mechanisms, and pathways. It assigns the terms "hard" or "soft," and "acid" or "base" to chemical species. "Hard" applies to species which are small, have high charge states (the charge criterion applies mainly to acids, to a lesser extent to bases), and are weakly polarizable. "Soft" applies to species which are big, have low charge states, and are strongly polarizable. The Hard-Soft Acid-Base (HSAB) relationship establishes reactivity rules between molecules: hard acids prefer to react with hard bases and soft acids prefer to react with soft bases (soft likes soft, hard likes hard). Borderline acids prefer to react with borderline bases.

Non-limiting examples of hard Lewis acids include: H⁺, Li⁺, Na⁺, K⁺, Mg²⁺, Ca²⁺, Al³⁺, Cr²⁺, Fe³⁺, BF₃, B(OR)₃, AlMe₃, AlCl₃, AlH₃, SO₃, RCO⁺, CO₂, HX, I⁷⁺, Cl⁷⁺, I⁵⁺, Zr⁴⁺, Ti⁴⁺, Th⁴⁺, Ga³⁺, In³⁺, and La³⁺.

Non-limiting examples of soft Lewis acid includes: Cu⁺, Ag⁺, Pd²⁺, Pt²⁺, Hg²⁺, BH₃, GaCl₃, I₂, Br₂, carbenes, trinitrobenzene, chloranil, quinones, and bulk metals

Non-limiting examples of borderline Lewis acids include: Fe²⁺, Co²⁺, Cu²⁺, Zn²⁺, Sn²⁺, Sb³⁺, Bi³⁺, BMe₃, SO₂, Cr³⁺, and NO⁺.

Non-limiting examples of hard Lewis bases include: H₂O, OH⁻, F⁻, AlkylCOO⁻, SO₄²⁻, Cl⁻, CO₃²⁻, NO₃⁻, ROH, RO-, R₂O, NH₃, and RNH₂.

Non-limiting examples of soft Lewis bases include: R₂S, RSH, RS⁻, I⁻, R₃P, (RO)₃P, CN⁻, RCN, CO, C₂H₄, C₆H₆, H⁻, and R⁻.

Non-limiting examples of borderline Lewis bases include: ArNH₂, C₅H₅N (pyridine), Br⁻, and NO₂⁻.

Hard Lewis acids bind to hard Lewis bases to give charge-controlled (ionic) complexes. Such interactions are dominated by the +/- charges on the Lewis acid and Lewis base species.

Soft Lewis acids bind to soft Lewis bases to give frontier molecular orbital (FMO) controlled covalent complexes.

Using HSAB relationships, a strong interface (either ionic or covalent) can be created between the surface of the polymeric support coated with a metal oxide or bulk metal and the pyrene fluorophore. The pyrene fluorophore can be functionalized with appropriate moieties which can act as a hard, soft, or borderline acid or base.

For example, 1-pyrene decanoic acid in the form of its carboxylate salt can act as a hard base.

For example, pyrene alkane thiols, (7), (8), and (9) can act through the thiol groups, as soft bases.

Using this approach, interactions (hard acid-hard base) or covalent interactions (soft acid-soft base) can be designed for the interface.

The metal oxides is Cu₂O.

In the present invention pyrene is attached by reaction of a soft base pyrene thiol (or its anion Pyrene-R-S⁻) with a soft acid Cu₂O to form a covalent bond.

In one embodiment, the pyrene is attached by a covalent bond between the surface of the metal (or a metal oxide) and a thiol group (or its anion Pyrene-R-S⁻).

.

.

Structure (5) represents 1-pyrene-1-yl-methanethiol.

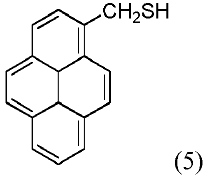

Structure (6) represents 5-(pyrene-1-yl-methoxy)pentane-1-thiol.

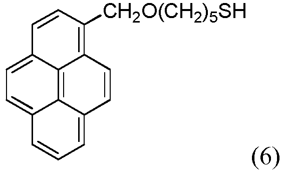

Structure (7) represents 8-(pyrene-1-yl-methoxy)pentane-1-thiol.

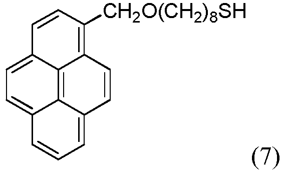

.

Structure (5) represents the anion of pyrene-1-yl-methanethiol.

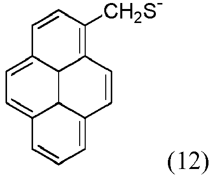

Structure (6) represents the anion of 5-(pyrene-1-yl-methoxy)-pentane-1-thiol.

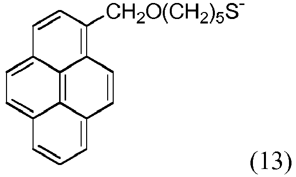

Structure (7) represents the anion of 8-(pyrene-1-yl-methoxy)-pentane-1-thiol.

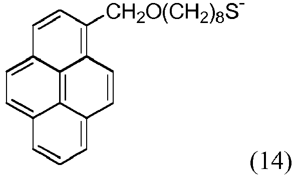

In one embodiment the oxygen sensor comprises a support. The support may be transparent, translucent, or opaque. The support may be rigid or flexible. Exemplary polymeric materials for making such supports include polyesters [such as poly(ethylene terephthalate) and poly(ethylene naphthalate)], cellulose acetate and other cellulose esters, polyvinyl acetal, polyolefins, polycarbonates, and polystyrenes. Preferred polymeric supports include polymers having good heat stability, such as polyesters and polycarbonates. Support materials may also be treated or annealed to reduce shrinkage and promote dimensional stability. Opaque supports can also be used, such metals and resin-coated papers that are stable to high temperatures. Rigid supports such as glass are particularly useful.

Fig. 1 shows a fluorescence quenching oxygen sensor (100). The sensor comprises a substrate or support (102) coated with a hard or soft acid (104) attached to a pyrene compound of formula (I) Y-R-Pyrene (106).

Fig. 2 shows a fluorescence quenching oxygen detector (200) incorporating the oxygen sensor (100). The detector comprises an excitation source (208), such as an LED, a fluorescence detector (210) and the optional driving and signal conditioning circuitry (212). Alternatively the driving and signal conditioning circuitry may be located separately and electronically connected to the detector.

### Preparation of fluorescence quenching oxygen sensors

A material containing a hard or soft acid is deposited onto a support. Deposition can be carried out via well-known methods, such as doctor blade coating, anodic oxidation, or electrodeposition. For example,; Cu₂O can be deposited onto a support using anodic oxidation of a copper surface or electrodeposition.

The fluorescence quenching oxygen sensor can then be prepared by depositing one or more of the Y-R-Pyrene compounds of formula (I) onto the support having the appropriate compound having soft acid groups coated thereon. One or more fluorescent pyrene compounds represented by formula (I) is dissolved in an appropriate solvent to form a homogeneous solution. Deposition is then carried out using any of the techniques listed above. In one embodiment, the support is dip-coated into a solution of the pyrene compound. Reaction of the compound having the appropriate soft acid on the support with the appropriate soft base on the Y portion of the Y-R-Pyrene compound forms the fluorescence sensor.

The coated slide is stored for three days, after which the film is dried in vacuum at 50°C for three hours. The film is then dried in a dessicator for three weeks.

### Preparation of fluorescence quenching oxygen detectors

As shown in Fig. 2, the oxygen sensor (100) may be incorporated into a miniature solid-state detector (200) that uses fluorescence to measure oxygen partial pressure. In one embodiment, an excitation source, such as an LED (208), fluorescence detector (210), and driving and conditioning circuitry (212) are all integrated into the device. The substrate-Y-R-Pyrene (or mixtures thereof) is excited by the excitation source with an appropriate wavelength and fluoresces. Upon exposure to oxygen the fluorescence intensity and it time decay is measured by the detector. The decay rate of fluorescence varies with the oxygen concentration.

### References:

O. Buiu, B. Serban, M. Mihaila, M. Brezeanu, and S. Costea "New Design Approach for Quantum Dot Solar Cell," SIZEMAT2 - September 19 - 21, 2010, Nessebar, Bulgaria.
Y. Amao, I. Okura, T. Miyashita, Bull Chem Soc. Jpn. 74, (2001) 1159.
B.I. Ipe, K. Yoosaf, G. Thomas, Pramana -journal of physics 65(5) (2005), 909.
Jolly, W. L. (1984), "Modern Inorganic Chemistry", New York: McGraw-Hill. ISBN 0070327602.
A.M. Lazarin, Y. Gushikem, S.C. Castro, J. Mater. Chem. 10, (2000), 2526.
R.G. Pearson, "Hard and soft acids and bases" J. Amer. Chem. Soc., 85,(22),(1963), 3533.
B. Serban, M. Mihaila, S. Costea, O Buiu "New Ligand Selection Rule for Quantum Dot Functionalization," Semiconductor Conference, 2009. CAS 2009. International, Oct 12-14, 2009, 81-84.
L.R.D. Silva, Y. Gushikem, M.C. Gonçalves, U.P.Rodrigues-Filho, S.C. Castro, J. Appl. Polym. Sci. (1995), 58, 1669.
http://www.ias.ac.in/pramana/v65/p909/fulltext.pdf.
http://www.meta-synthesis.com/webbook/43_hsab/HSAB.html.

Structure (6) represents the anion of 5-(pyrene-1-yl-methoxy)-pentane-1-thiol.

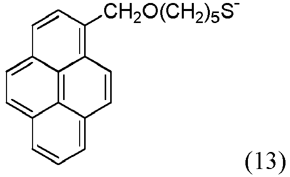

Structure (7) represents the anion of 8-(pyrene-1-yl-methoxy)-pentane-1-thiol.

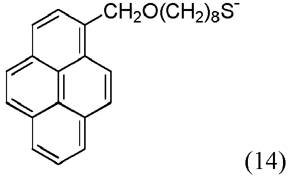

In one embodiment the oxygen sensor comprises a support. The support may be transparent, translucent, or opaque. The support may be rigid or flexible. Exemplary polymeric materials for making such supports include polyesters [such as poly(ethylene terephthalate) and poly(ethylene naphthalate)], cellulose acetate and other cellulose esters, polyvinyl acetal, polyolefins, polycarbonates, and polystyrenes. Preferred polymeric supports include polymers having good heat stability, such as polyesters and polycarbonates. Support materials may also be treated or annealed to reduce shrinkage and promote dimensional stability. Opaque supports can also be used, such metals and resin-coated papers that are stable to high temperatures. Rigid supports such as glass are particularly useful.

Fig. 1 shows a fluorescence quenching oxygen sensor (100). The sensor comprises a substrate or support (102) coated with a hard or soft acid (104) attached to a pyrene compound of formula (I) Y-R-Pyrene (106).

Fig. 2 shows a fluorescence quenching oxygen detector (200) incorporating the oxygen sensor (100). The detector comprises an excitation source (208), such as an LED, a fluorescence detector (210) and the optional driving and signal conditioning circuitry (212). Alternatively the driving and signal conditioning circuitry may be located separately and electronically connected to the detector.

### Preparation of fluorescence quenching oxygen sensors

A material containing a hard or soft acid is deposited onto a support. Deposition can be carried out via well-known methods, such as doctor blade coating, anodic oxidation, or electrodeposition. For example, TiO₂ can be deposited onto a support using a doctor blade method; Cu₂O can be deposited onto a support using anodic oxidation of a copper surface or electrodeposition.

The fluorescence quenching oxygen sensor can then be prepared by depositing one or more of the Y-R-Pyrene compounds of formula (I) onto the support having the appropriate compound having hard or soft acid groups coated thereon. One or more fluorescent pyrene compounds represented by formula (I) is dissolved in an appropriate solvent to form a homogeneous solution. Deposition is then carried out using any of the techniques listed above. In one embodiment, the support is dip-coated into a solution of the pyrene compound. Reaction of the compound having the appropriate hard or soft acid on the support with the appropriate hard or soft base on the Y portion of the Y-R-Pyrene compound forms the fluorescence sensor.

The coated slide is stored for three days, after which the film is dried in vacuum at 50°C for three hours. The film is then dried in a dessicator for three weeks.

### Preparation of fluorescence quenching oxygen detectors

As shown in Fig. 2, the oxygen sensor (100) may be incorporated into a miniature solid-state detector (200) that uses fluorescence to measure oxygen partial pressure. In one embodiment, an excitation source, such as an LED (208), fluorescence detector (210), and driving and conditioning circuitry (212) are all integrated into the device. The substrate-Y-R-Pyrene (or mixtures thereof) is excited by the excitation source with an appropriate wavelength and fluoresces. Upon exposure to oxygen the fluorescence intensity and it time decay is measured by the detector. The decay rate of fluorescence varies with the oxygen concentration.

### References:

O. Buiu, B. Serban, M. Mihaila, M. Brezeanu, and S. Costea "New Design Approach for Quantum Dot Solar Cell," SIZEMAT2 - September 19 - 21, 2010, Nessebar, Bulgaria.
Y. Amao, I. Okura, T. Miyashita, Bull Chem Soc. Jpn. 74, (2001) 1159.
B.I. Ipe, K. Yoosaf, G. Thomas, Pramana journal of physics 65(5) (2005), 909.
Jolly, W. L. (1984), "Modern Inorganic Chemistry", New York: McGraw-Hill. ISBN 0070327602.
A.M. Lazarin, Y. Gushikem, S.C. Castro, J. Mater. Chem. 10, (2000), 2526.
R.G. Pearson, "Hard and soft acids and bases" J. Amer. Chem. Soc., 85,(22),(1963), 3533.
B. Serban, M. Mihaila, S. Costea, O Buiu "New Ligand Selection Rule for Quantum Dot Functionalization," Semiconductor Conference, 2009. CAS 2009. International, Oct 12-14, 2009, 81-84.
L.R.D. Silva, Y. Gushikem, M.C. Gonçalves, U.P.Rodrigues-Filho, S.C. Castro, J. Appl. Polym. Sci. (1995), 58, 1669.
http://www.ias.ac.in/pramana/v65/p909/fulltext.pdf.
http://www.meta-synthesis.com/webbook/43_hsab/HSAB.html.

## Claims

1. A fluorescence quenching oxygen sensor (100) comprising a support (102) having coated thereon;
Cu₂O (104);
and
one or more pyrene compounds (106) represented by
Y-R-Pyrene (I)
attached to the Cu₂O surface;
wherein Y is a thiol group, or the anion of a thiol group and R is an aliphatic linking group having 1 to 19 carbon atoms.

2. The fluorescence quenching oxygen sensor of claim 1, wherein the pyrene is 1-pyrene.

3. The fluorescence quenching oxygen sensor of claim 1, wherein Y-R-Pyrene is represented by one or more of:

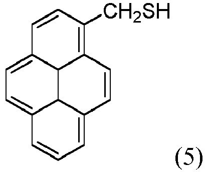

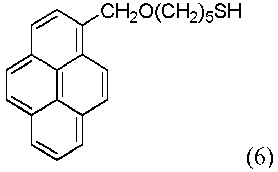

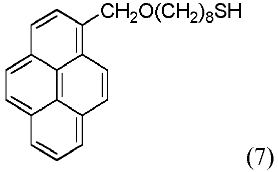

4. The fluorescence quenching oxygen sensor of claim 1, wherein Y-R-Pyrene is represented by one or more of:

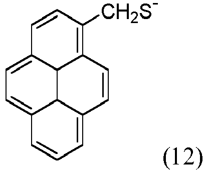

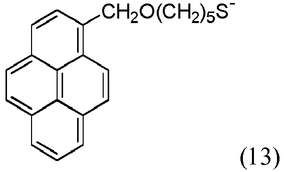

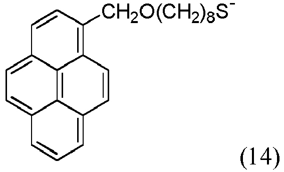

5. The fluorescence quenching oxygen sensor of any of preceding claim, wherein the support is glass.

6. A fluorescence quenching oxygen detector (200) comprising fluorescence quenching oxygen sensor (100) of claim 1 and
an excitation source (208); and
a fluorescence detector (210).

7. The fluorescence quenching oxygen detector of claim 6, wherein the excitation source is an LED.

8. The fluorescence quenching oxygen detector of claim 6 or 7 the support is glass.

9. The fluorescence quenching oxygen detector of any of claims 6 to 8, wherein Y-R-Pyrene is represented by one or more of: 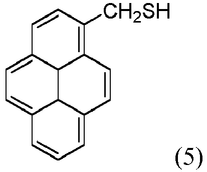 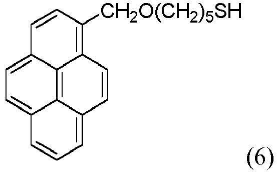 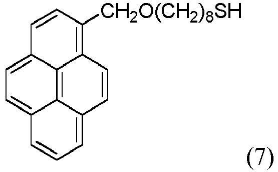 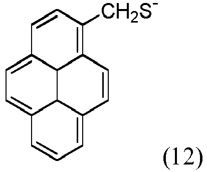 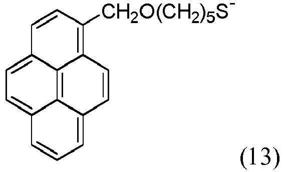 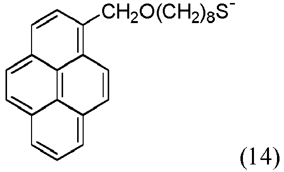 and the compound havingsoft acid groups is Cu₂O.

10. A method of preparing a fluorescence quenching oxygen sensor (100) comprising coating onto a support (102);
Cu₂O (204);
and one or more pyrene compounds (206) represented by
Y-R-Pyrene (I)
attached to the Cu₂O surface;
wherein Y is a thiol group, or the anion of a thiol group and R is an aliphatic linking group having 1 to 19 carbon atoms;
wherein Y-R-Pyrene is represented by one or more of:

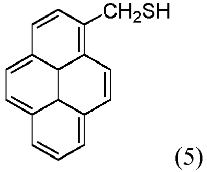

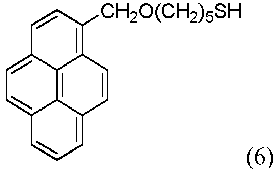

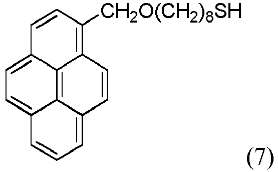

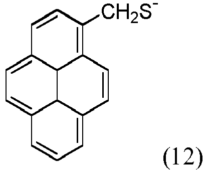

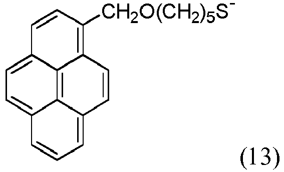

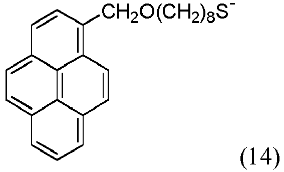

## Patentansprüche

1. Fluoreszenzlöschungs-Sauerstoffsensor (100), umfassend einen Träger (102), der darauf aufgeschichtet aufweist:
Cu₂O (104);
und eine oder mehrere an die Cu₂O-Oberfläche gebundene Pyrenverbindungen (106), die durch
Y-R-Pyren (I)
dargestellt werden;
wobei Y eine Thiolgruppe oder das Anion einer Thiolgruppe ist und R eine aliphatische Verknüpfungsgruppe mit 1 bis 19 Kohlenstoffatomen ist.

2. Fluoreszenzlöschungs-Sauerstoffsensor gemäß Anspruch 1, wobei das Pyren 1-Pyren ist.

3. Fluoreszenzlöschungs-Sauerstoffsensor gemäß Anspruch 1, wobei Y-R-Pyren dargestellt wird durch eines oder mehrere von:

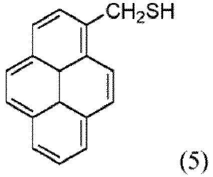

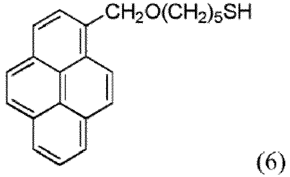

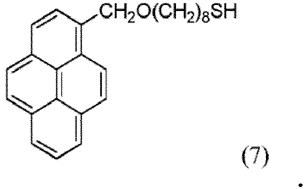

4. Fluoreszenzlöschungs-Sauerstoffsensor gemäß Anspruch 1, wobei Y-R-Pyren dargestellt wird durch eines oder mehrere von:

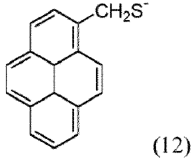

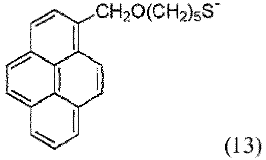

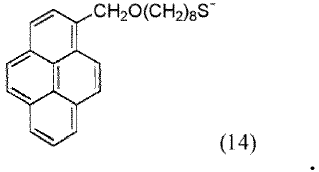

5. Fluoreszenzlöschungs-Sauerstoffsensor gemäß einem der vorstehenden Ansprüche, wobei der Träger Glas ist.

6. Fluoreszenzlöschungs-Sauerstoffdetektor (200), umfassend einen Fluoreszenzlöschungs-Sauerstoffsensor (100) gemäß Anspruch 1 und
eine Anregungsquelle (208); und
einen Fluoreszenzdetektor (210).

7. Fluoreszenzlöschungs-Sauerstoffdetektor gemäß Anspruch 6, wobei die Anregungsquelle eine LED ist.

8. Fluoreszenzlöschungs-Sauerstoffdetektor gemäß Anspruch 6 oder 7, wobei der Träger Glas ist.

9. Fluoreszenzlöschungs-Sauerstoffdetektor gemäß einem der Ansprüche 6 bis 8, wobei Y-R-Pyren dargestellt wird durch eines oder mehrere von: 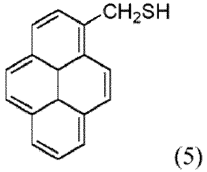 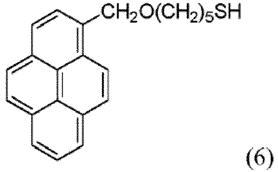 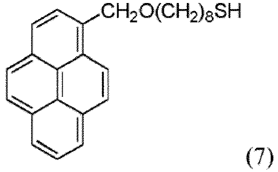 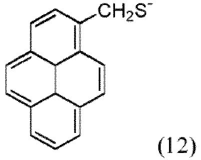 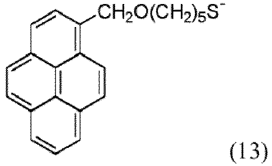 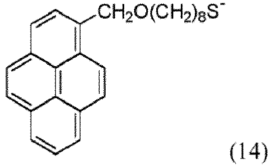 und die Verbindung mit weichen Säuregruppen Cu₂O ist.

10. Verfahren zur Herstellung eines Fluoreszenzlöschungs-Sauerstoffsensors (100), umfassend Aufschichten auf einen Träger (102):
Cu₂O (204);
und eine oder mehrere an die Cu₂O-Oberfläche gebundene Pyrenverbindungen (206), die durch
Y-R-Pyren (I)
dargestellt werden;
wobei Y eine Thiolgruppe oder das Anion einer Thiolgruppe ist und R eine aliphatische Verknüpfungsgruppe mit 1 bis 19 Kohlenstoffatomen ist;
wobei Y-R-Pyren dargestellt wird durch eines oder mehrere von:

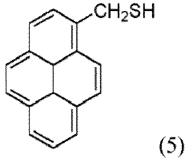

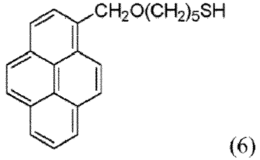

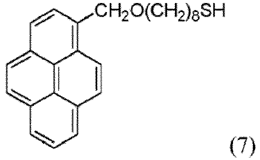

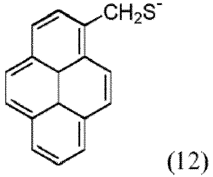

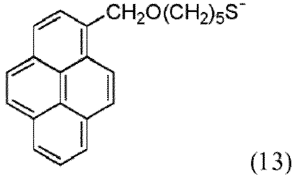

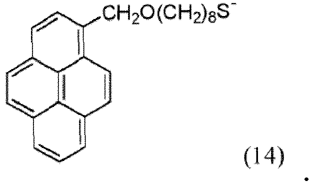

## Revendications

1. Capteur d'oxygène à extinction de fluorescence (100) comprenant un support (102) sur lequel sont revêtus ;
Cu₂O (104) ;
et un ou plusieurs composés de pyrène (106) représentés par
Y-R-Pyrène (I)
fixés à la surface de Cu₂O ;
où Y est un groupe thiol, ou l'anion d'un groupe thiol et R est un groupe de liaison aliphatique ayant 1 à 19 atomes de carbone.

2. Capteur d'oxygène à extinction de fluorescence selon la revendication 1, dans lequel le pyrène est le 1-pyrène.

3. Capteur d'oxygène à extinction de fluorescence selon la revendication 1, dans lequel Y-R-Pyrène est représenté par l'un ou plusieurs de :

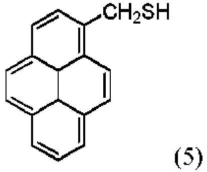

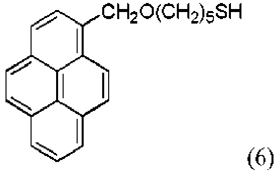

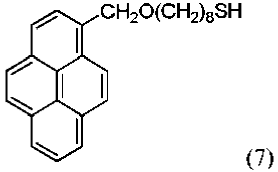

4. Capteur d'oxygène à extinction de fluorescence selon la revendication 1, dans lequel Y-R-Pyrène est représenté par l'un ou plusieurs de :

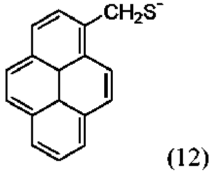

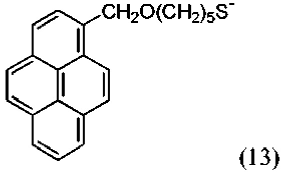

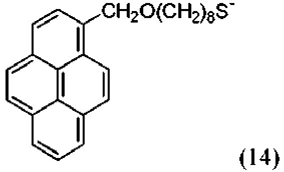

5. Capteur d'oxygène à extinction de fluorescence selon l'une quelconque des revendications précédentes, dans lequel le support est du verre.

6. Détecteur d'oxygène à extinction de fluorescence (200) comprenant un capteur d'oxygène à extinction de fluorescence (100) selon la revendication 1 et
une source d'excitation (208) ; et
un détecteur de fluorescence (210).

7. Détecteur d'oxygène à extinction de fluorescence selon la revendication 6, dans lequel la source d'excitation est une LED.

8. Détecteur d'oxygène à extinction de fluorescence selon la revendication 6 ou 7 dans lequel le support est du verre.

9. Détecteur d'oxygène à extinction de fluorescence selon l'une quelconque des revendications 6 à 8, dans lequel Y-R-Pyrène est représenté par l'un ou plusieurs de : 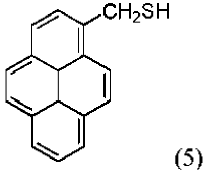 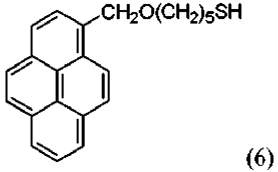 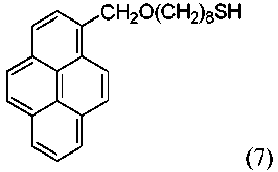 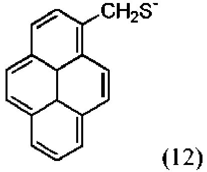 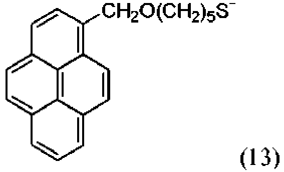 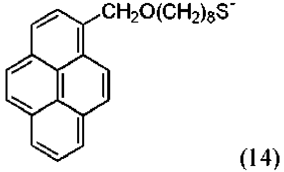 et le composé ayant des groupes acides mous est Cu₂O.

10. Procédé de préparation d'un capteur d'oxygène à extinction de fluorescence (100) comprenant le revêtement sur un support (102) de :
Cu₂O (204) ;
et un ou plusieurs composés de pyrène (106) représentés par
Y-R-Pyrène (I)
fixés à la surface de Cu₂O ;
où Y est un groupe thiol, ou l'anion d'un groupe thiol et R est un groupe de liaison aliphatique ayant 1 à 19 atomes de carbone ;
dans lequel Y-R-Pyrène est représenté par l'un ou plusieurs de :
